# EUROPEAN PATENT SPECIFICATION

(11) **EP 3 789 646 B1**
(45) Date of publication and mention of the grant of the patent: **12.04.2023**
(21) Application number: 19195537.6
(22) Date of filing: 05.09.2019
(51) Int. Cl.: F16L 3/10, F16L 55/033, B60R 16/02, F16L 55/035

(54) **A CLIP ASSEMBLY**
EINE CLIP-ANORDNUNG
UN ENSEMBLE DE CLIP

(43) Date of publication of application: 10.03.2021
(73) Proprietor: Illinois Tool Works Inc., Glenview, IL 60025 (US)
(72) Inventor: LEVERGER, Eric, Glenview, Illinois 60025 (US)
(74) Representative: HGF

(56) References cited:
- CN-A- 106 641 455
- CN-B- 103 672 174
- JP-A- H10 259 884
- US-A1- 2004 182 973

## Description

The present invention relates to fasteners, in particular, to devices for retaining a component within a confined space, such as pipes or tubes for transporting fluids or electric cables.

### Introduction

Clips used for HVAC fixtures and fittings in vehicles have been used extensively in assembly lines for motor vehicles to connect appliances, pipes and tubes in an air tight manner. Clips are only considered reliable if they will not become loose due to motor vibration over time and as such may require tools or sealants to reliably create an air tight seal. Such tools can be awkward to use in the crowded under bonnet space of a vehicle, adding significant time and cost to vehicle assembly lines. Sealants add their own problems as HVAC systems often contain several replaceable or serviceable parts which a technician will need to be able to get to, preferably with minimal labour, sealants make these services take longer and require replacement tubes/ pipes.

Some known clips, such as those disclosed in CN 103 672 174 B and US 2004/182973 A1, have attempted to alleviate the above problems by being closable by hand and locking into place such that vibrations cannot open the clip. In particular, document CN 103 672 174 B discloses a clip comprising a retaining ring having an open circular arc, the clip having a toothed bracket which can be connected to a toothed snap button. However, these clips are known to be awkward to use, unreliable at creating an airtight seal and difficult to close by hand due to the large forces required.

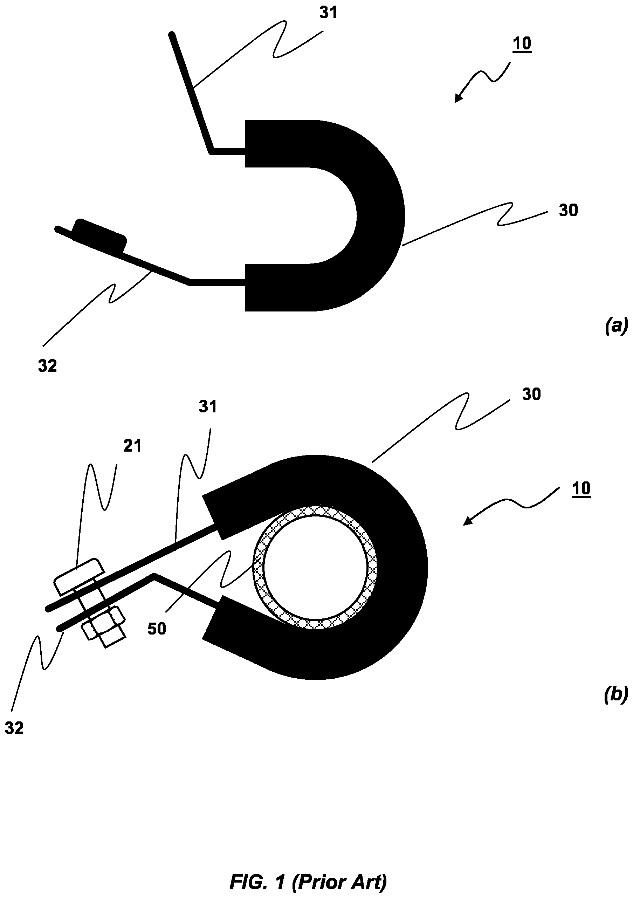

Figure 1, for example, shows a typical clip 10 (a) when opened, and (b) when closed around a pipe 50 by a fastener 21. The clip 10 typically comprises a retaining portion 30, as well as, first and second closure portions 31, 32. The retaining portion 30 may be simply formed by the strip of material but covered with, for example, a rubber sleeve. The strip can be deformed by hand, allowing a user to bend the retaining portion 30 by forcing the first and second closure portions 31, 32 towards each other.

As illustrated in Figure 1b the clip 10 may be secured by a fastener 21, with the retaining portion 30 bent around the pipe 50 such that it is frictionally retained by the rubber sleeve.

However, fitting and securing such a clip 10 can be very cumbersome as it requires several steps, including fixing the clip assembly 10 in place over a component such s a pipe 50, forcing the closure portions 31, 32 together, either by hand or by mechanical means like pliers, holding the closure portions together whilst affixing the fastener 21, and finally, actuating the fixing means, either by tool or by hand to lock the closure portions 31, 32 into position. These steps can be relatively time consuming, particularly in cramped spaces, leading to hold-ups and bottle necks on assembly lines.

Consequently, it is a goal of the present invention to alleviate or mitigate the aforementioned problems.

### Summary of the Invention

In accordance with the present invention there is provided a clip according to the appended claims.

According to claim 1, the present invention provides a clip assembly comprising a retainer member, having a first cam surface, configured to receive and removably retain a component; a resilient closing member, having a first end portion pivotably coupled to a fulcrum of said retainer member, and a second end portion adapted to operably engage with said first cam surface so as to move from a first radial trajectory towards an outer second radial trajectory when moving about said fulcrum between an open position and a closed position; a locking member, having a second cam surface configured to move said second end portion from said second radial trajectory towards said first radial trajectory during operation, and removably secure said second end portion.

In use, the retainer member is attached to a component, such that when closingly rotating the resilient closing part about the fulcrum, the second end portion forces the retainer member to close around the pipe. As the resilient closing part is closingly rotated it is forced radially outwards by the first cam surface of the retainer member, elastically deforming and changing the trajectory of the resilient closing member from a first trajectory to a second trajectory. This elastic deformation equally forces the retainer member radially inwards. As the resilient closing member is further closingly rotated about the fulcrum, the second end portion comes into contact with the second cam surface which forces the resilient closing member back towards its original trajectory, further forcing the retainer member radially inwards. When terminally rotated, the resilient closing member can be released and will be removably secured to the locking member. Thus, there is provided a clip assembly which can translate rotational force on the resilient closing member into radially inward compressive force, allowing for easy, high force coupling of a clip and a component.

Advantageously, said retainer member may further comprise an openable resilient clamp member having an outer clamp surface and an inner clamp surface.

This provides the advantage that, in use, the retainer member can be placed over two preconnected components, without requiring that the clip assembly is in place before the components are connected.

Advantageously, said inner clamp surface may comprise a contact member, configured to contactingly engage with the component during use. Preferably, said contact member may comprise a plurality of circumferentially spaced apart contact elements protruding radially inwards from said inner clamp surface. Even more preferably, said contact member is formed of an elastomeric material. Suitably, said contact member may be removably coupled to said clamp member.

The contact member acts as a conduit for the compression generated by rotation of the resilient closing member to hold the pipe in place. Having a plurality of circumferentially spaced apart contact elements aids with ensuring that the force is distributed across the outer surface of the component whilst also allowing for variable diameters of component and variable sizes of clip assembly components. Also, forming the contact member of an elastomeric material allows for a friction fit between the clip assembly and the component whilst providing a dampening for potential vibrations which could otherwise shake the clip assembly loose. Damage from fatigue is common in the potentially harsh environment under the bonnet of vehicles, therefore being able to replace some components of an assembly without needing to replace the whole assembly can reduce waste and cost during repair, or replacement due to outdated parts.

Advantageously, said locking member may further comprise a locking recess configured to receive and retain said second end portion. Preferably, said second end portion may comprise a lip portion configured to latchingly engage with said locking recess.

Advantageously, said resilient closing member may further comprise a handle portion, configured to manually move said resilient closing member between said closed position and said open position. The handle portion gives an operative something to grip as they rotate the resilient closing member, making the operation easier. The handle portion also increases the distance between the fulcrum and the area to which the force is being applied, making rotation and hence the compression of the retaining member, easier, therefore, improving the ease of use.

Advantageously, said handle portion may be further configured to abuttingly engage with said locking member when in said closed position. An operative may be able to use the tactile feeling of the handle portion abutting the locking member to know that the locking member is in the closed position, this is particularly useful when the operative is working in low light conditions or when his view of the clip assembly is obstructed by other components.

Advantageously, said first end portion may be removably coupled to said fulcrum.

Damage from fatigue is common in the harsh under bonnet environment of vehicles, therefore being able to replace the resilient closing member without needing to replace the whole clip assembly can reduce waste and cost during repair, or replacement due to outdated parts.

Suitably, the clip assembly may further comprise a flexible link member coupling said resilient closing member to said retainer member.

If the resilient closing member is knocked or handled with too much force, it may come free from the fulcrum potentially getting lost. The flexible link provides the advantage of a safety in such an event.

Advantageously, said retainer member may further comprise a mount configured to affix said clip assembly to an external structure. Preferably, said mount may comprise a through-hole for a screw fastener or bolt fastener.

Advantageously, locking member may be an integral part of said retainer member.

Advantageously, said retainer member, said resilient closing member and said locking member may be made from a polymer. Many polymeric materials are capable of surviving under fatigue and through temperature variations as required.

### Brief Description of the Drawings

Embodiments of the invention are now described, by way of example only, hereinafter with reference to the accompanying drawings, in which:
**Figure 1** shows a typical clip assembly (a) in an open position and (b) in a closed position around a tubular component;
**Figure 2** illustrates a perspective side-view of an example embodiment of the clip assembly of the present invention in an open position;
**Figure 3** illustrates perspective side-views of the clip assembly shown in Figure 2, (a) in an open position but with a pipe positioned in the retainer, and (b) in a closed position securing the pipe in place;
**Figure 4** shows the open clip assembly of Figure 2, (a) from the side, (b) from the top and (c) from below;
**Figure 5** shows (a) a side-view and (b) a top-view of the clip assembly of Figure 2 in its closed position securing a pipe;
**Figure 6 (a)** to **(g)** shows cross-sectional side-views of a sequence of closing the clip assembly of Figure 2;
**Figure 7** is a schematic illustration of the closing function of the clip assembly shown in Figure 2, including various steps during closing, as well as, the trajectories of the end portion of the closing member;
**Figure 8** shows perspective views of an alternative embodiment of the clip assembly of the present invention, (a) perspective side-view from the left, (b) perspective side-view from the right and (c) a perspective side-view from the left, but with alternative contact member within the retainer member.

### Detailed Description

The described example embodiment relates to a clip assembly for vehicles. However, the invention is not necessarily restricted to vehicles altogether but may also be used with any other structure requiring lines, cables, tubes or pipes to be fixed in place.

Certain terminology is used in the following description for convenience only and is not limiting. The words 'right', `left', 'lower', 'upper', 'front', 'rear', 'upward', 'down' and 'downward' designate directions in the drawings to which reference is made and are with respect to the described component when assembled and mounted. The words 'inner', 'inwardly' and 'outer', 'outwardly' refer to directions toward and away from, respectively, a designated centreline or a geometric centre of an element being described (e.g. central axis), the particular meaning being readily apparent from the context of the description.

Further, as used herein, the terms 'connected', 'attached', 'coupled', 'mounted' are intended to include direct connections between two members without any other members interposed therebetween, as well as, indirect connections between members in which one or more other members are interposed therebetween. The terminology includes the words specifically mentioned above, derivatives thereof, and words of similar import.

Further, unless otherwise specified, the use of ordinal adjectives, such as, 'first', 'second', 'third' etc. merely indicate that different instances of like objects are being referred to and are not intended to imply that the objects so described must be in a given sequence, either temporally, spatially, in ranking or in any other manner. Like reference numerals are used to depict like features throughout.

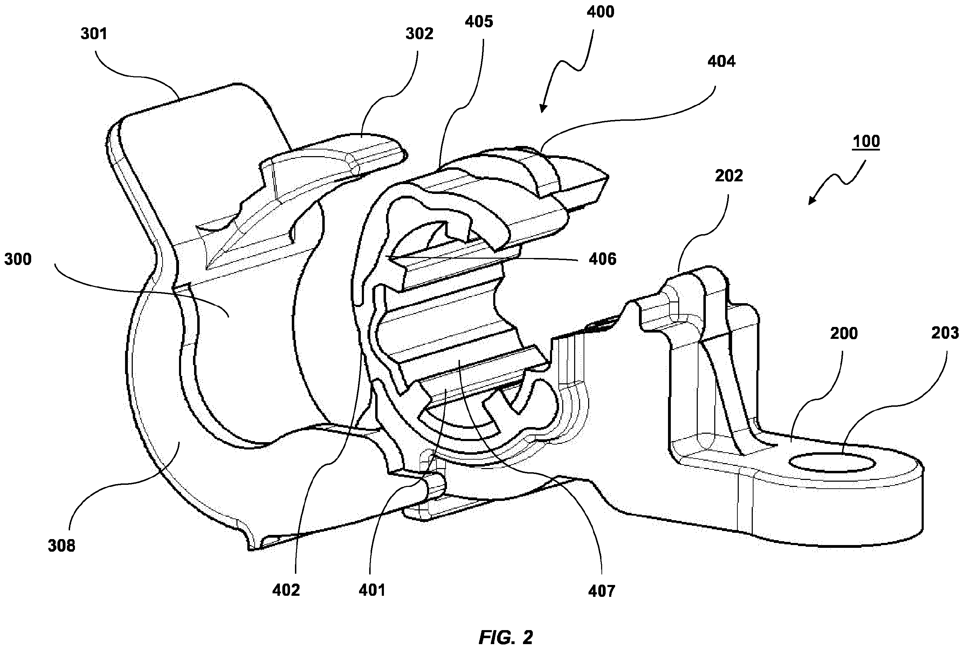

Referring now to Figure 2, an example of a clip assembly 100 is shown. The clip assembly 100 comprises a retainer member 400, a resilient closing member 300 and a locking member 200.

The retainer member 400 is constructed to accept and retain a pipe 500 in the embodiment shown, although it could be constructed for a variety of purposes including retaining wires, bundles of cables, barbed wire, fencing etc. The retainer member 400 is constructed such that it is flexible, and can be manoeuvred by hand, allowing a user to open it further to accommodate a pipe of larger diameter. The retainer member 400 has a flexible portion 402 which may comprise a thinner section of material or a different material which is more flexible than the rest of the retainer member 400.

The retainer member 400 has an inner clamp surface 406 which is constructed for retaining a component and an outer clamp surface 405 which is constructed for abutting with the resilient closing member. The retainer member 400 has a first cam surface 404 which protrudes radially outwards from the outer clamp surface 405.

In the embodiment shown, the retainer member 400 further comprises an openable resilient clamp member 407 which has four contact elements 401 which protruding radially inwardly such that they would engage with a component (e.g. pipe 500) set within the retainer member 400.

The resilient closing member 300 comprises a substantially arcuate section constructed to matingly retain the outer clamp surface 405 of the retainer member 400. The resilient closing member 300 comprises a first end portion 303 and a second end portion 302. The first end portion 303 is constructed to pivotably couple with an exterior fulcrum 204 of the retainer member 400. The second end portion 302 is constructed to operably couple with a locking member 200 when the clip assembly 100 is in the closed position, such that it does not open without the intent of an operative.

The resilient closing member 300 further comprises a handle 301 which may be used by an operative to rotate the resilient closing member 300 with respect to the retainer member 400. Under terminal rotation of the resilient closing member 300, the handle 301 may abut the locking member 200, preventing excessive rotation and potential damage.

The resilient closing member 300 may further comprise a guard section 308 which may prevent unintentional rotation about the axis of rotation perpendicular to the closing axis.

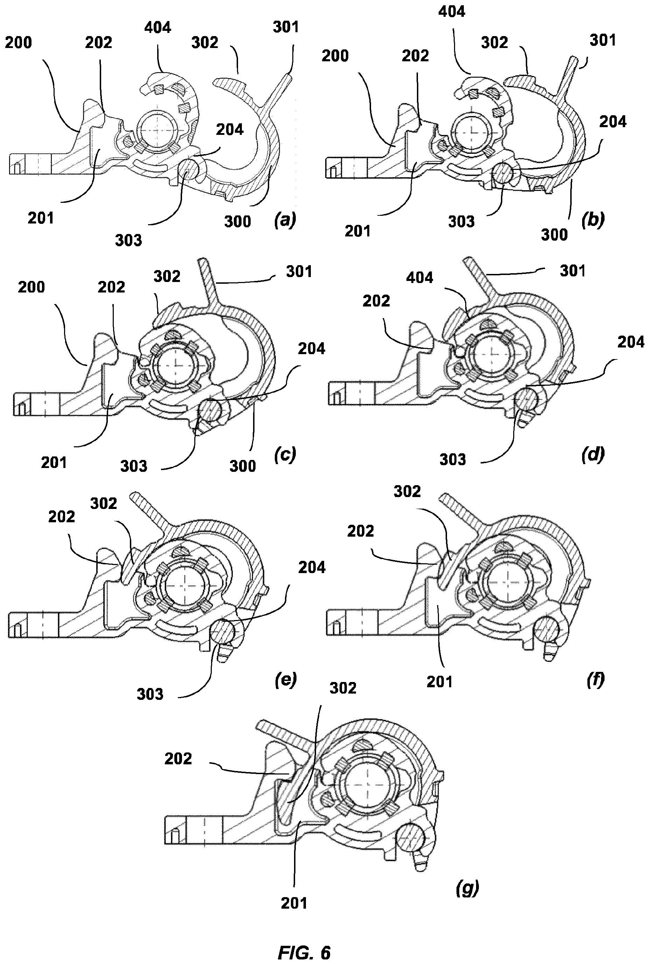

The locking member 200 comprises a second cam surface 202, which is configured to operatively engage with the second end portion 302 of the resilient closing member 300 when under rotation and to hold the resilient closing member 300 in the closed position. The locking member 200 also comprises a locking recess 201 (see Figure 6) which is constructed to accommodate the second end portion 302 of the resilient closing member 300 so as to prevent accidental decoupling of the locking member 200 and the second end portion 302. In the embodiment shown, the clip assembly 100 further comprises a mount 203 configured to fix the clip assembly 100 to an external part. It should be noted that the mount 203 may be an integral part of the locking member 200 or the retainer member 400.

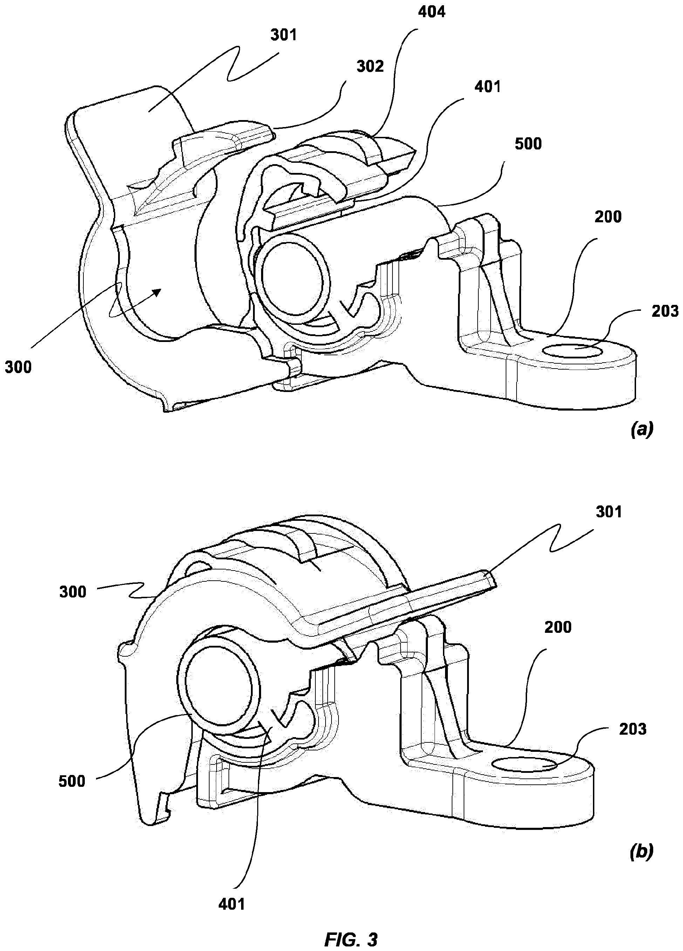

Figure 3 (a) shows the clip assembly 100 in the open form with a pipe 500 in the retainer member 400. It can be seen that the lower two contract protrusions are in contact with the pipe 500 when the clip assembly 100 is in the open position.

Figure 3 (b) shows the clip assembly 100 closed around the pipe 500 which is now clamped by the retainer member 400. The skilled person will recognise that all an operative is required to do to take the clip assembly 100 from the open form to closed form is to push (or pull) on the handle 301 without any requirement for tools or excessive space.

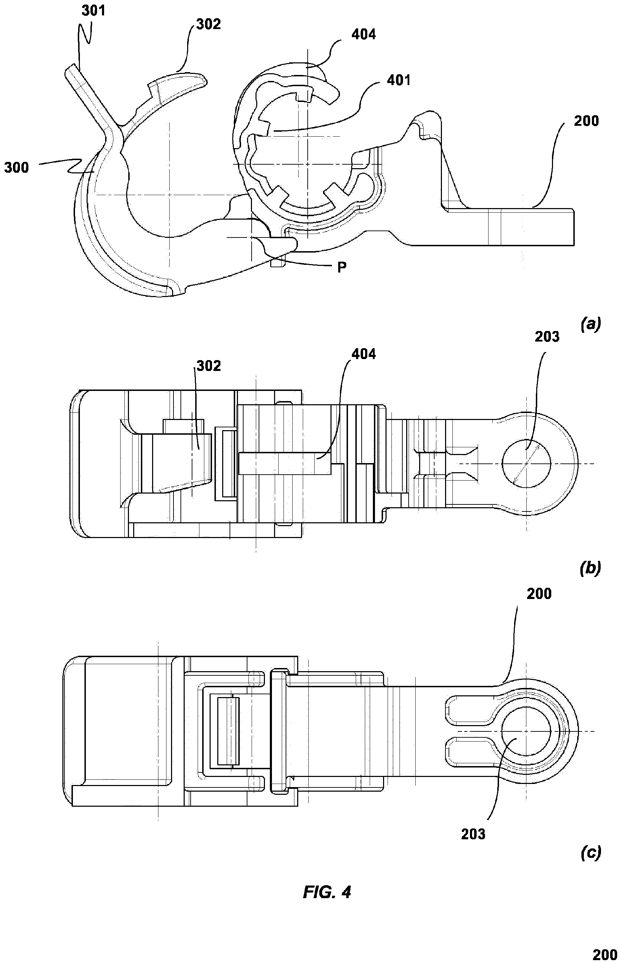

Figure 4 (a) shows a side view of the clip assembly 100. The centre of rotation of the resilient closing member 300 is shown by the letter 'P'. It can be seen that under rotation, the second end portion 302 will intersect and engage with the first cam surface 404 so as to initially urge the retainer member 400 to a closed position before stretchingly sliding over the first cam surface 404 and into engagement with the second cam surface 202.

Figure 4 (b) shows a top view of the clip assembly 100 in open form. In this particular example, the mount 203 is a through hole which may be threaded to accommodate a screw or smooth to accommodate a bolt or rivet. The mount 203 could also be a smooth surface which can accommodate an adhesive, sticking tape or zip tie such that the clip assembly can be mounted to any surface. Figure 4 (c) shows a bottom view of the clip assembly 100 in open form.

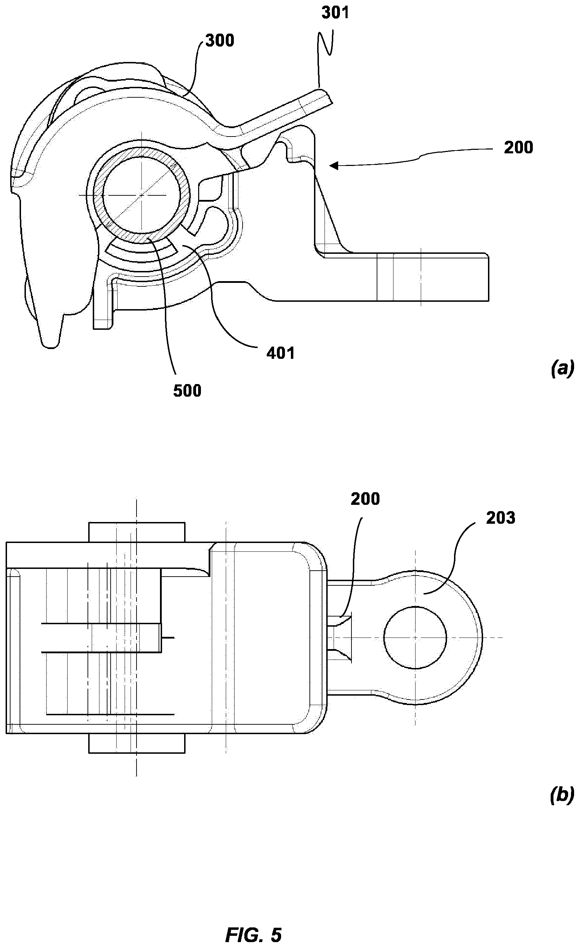

A side-view and top-view of the closed clip assembly 100 is shown in Figure 5.

Figures 6 (a) to (g) provide an illustration of the closing sequence of the clip assembly 100 from its open position (a) to the fully closed and engaged position (g). The resilient closing member 300 is pivotably attached to the retainer member 400 via the first end portion 303 at the fulcrum 204. In this embodiment the contact elements 401 are slidingly engaged with the internal clamp portion 406 of the retainer member 400. The connection between the resilient closing member and the fulcrum may be a snap fit connection which allows the resilient closing member to rotate without falling out of connection.

Figure 6 (b) shows the clip assembly 100 under partial closing rotation, it can be seen that if rotated further, the second end portion 302 intersects and slidingly engages with the first cam surface 404 of the retainer member 400.

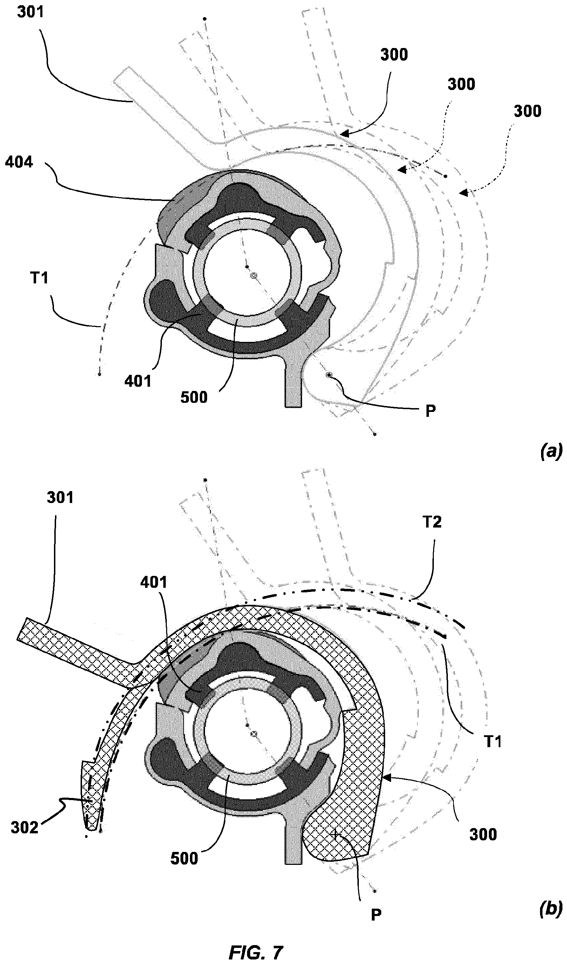

Figure 6 (c) shows the clip assembly 100 under further partial closing rotation and engaged with the first cam surface 404. At this stage the resilient closing member 300 has urged the retaining member 400 into a closed position around the pipe 500 and the second end portion 302 is "stretched" from its initial radial trajectory (see Fig. 7, T1) towards the outer radial trajectory (see Fig. 7, T2).

Figure 6 (d) shows the clip assembly 100 under even further partial closing rotation before engagement with the second cam surface 202. At this stage, the resilient closing member 300 has expanded ("stretched"), in that the distance from the second end portion 302 to the first end portion 303 has increased due to the first cam surface 404 forcing the resilient closing member 300 radially outwards under rotation (i.e. from T1 to T2, see Fig. 7).

Figure 6 (e) shows the clip assembly 100 under even further partial closing rotation when engaging with the second cam surface 202 of the locking member 200. At this stage the second end portion 302 is on radial trajectory T2 and slidingly engaged with the second cam surface 202. The expanding shape of the second end portion 302 causes the radially inwards pressure on the retainer member 400 to increase as the resilient closing member 300 is rotated.

Figure 6 (f) shows the clip assembly 100 under further partial closing rotation and in engagement with the locking member 200. It can be seen that the second end portion 302 is now urged by the second cam surface 202 into the recess 201 of the locking member 200.

Figure 6 (g) shows the clip assembly 100 in the fully closed position and the second end portion 202 lockingly engaged with the locking member 200. The "stretched" and inwardly locked resilient closing member 300 is now biased towards the pipe enclosing retainer member 400 therefore providing a contact force onto the retained pipe 500. The second end portion 302 is accommodated by the locking recess 201. The wall 308 of the resilient closing member 300 may prevent movement in a second lateral direction, preventing accidental disengagement of the clip assembly 100.

Figure 7 (a) and (b) is a simplified schematic illustration of the engagement between the resilient closing member 300 and the first cam surface 404 of the retainer member 400 during closing of the clip assembly 100. As the resilient closing member 300 rotates about pivot point 'P' (the fulcrum with the retainer member 400), the second end portion 302 moves on a first trajectory T1. Under trajectory T1, the seond end portion 302 intersects with first cam surface 404. When the second end portion engages with the first cam surface 404, the trajectory T1 of the second end portion 302 is changed by deformation of the resilient closing portion 300 to the trajectory T2 (radius of T2 > radius of T1), therefore allowing the second end portion 302 to slide up and over the first cam surface 404 and into engagement with the second cam surface 202.

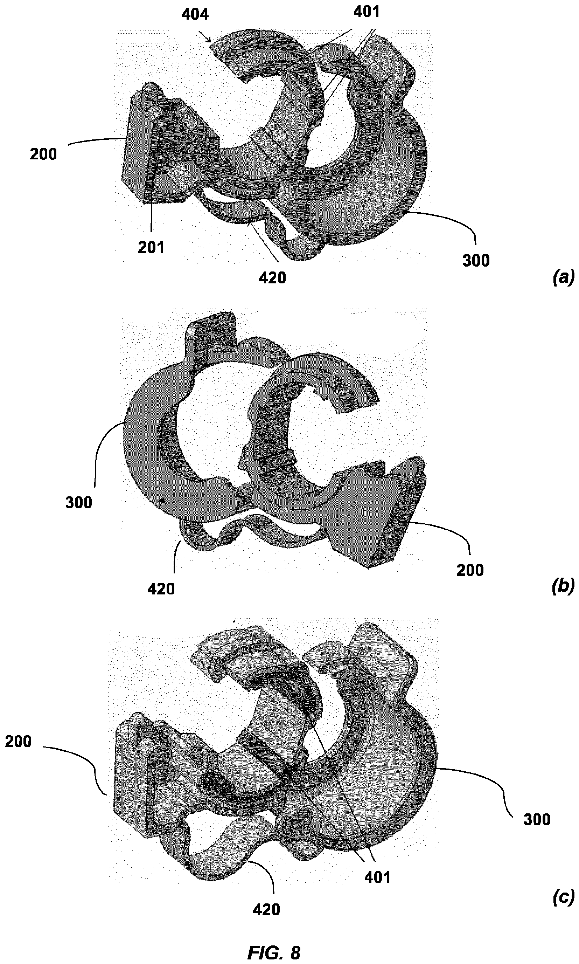

Figure 8 (a) shows an alternative embodiment of the clip assembly 100 of the present invention. In this particular example, the resilient closing member 300 and the retainer member 400 (with integral locking member 200) are connected by a flexible link member 420. This flexible link member 420 may prevent the two components from being detached from one another. Further, the flexible link member 420 may provide a biasing force towards the open position when the clip assembly 100 is closed, i.e. when closed, the flexible link member 420 will be fully stretched "pulling" on the resilient closing member 300.

It will be appreciated by persons skilled in the art that the above embodiment(s) have been described by way of example only and not in any limitative sense, and that various alterations and modifications to the detailed designs described above are possible without departing from the scope of the invention as defined by the appended claims.

## Claims

1. A clip assembly (100), comprising:
a retainer member (400), having a first cam surface (404), configured to receive and removably retain a component (500);
a resilient closing member (300), having a first end portion (303) pivotably coupled to a fulcrum (204) of said retainer member (400), and a second end portion (302) adapted to operably engage with said first cam surface (404) so as to move from a first radial trajectory (T1) towards an outer second radial trajectory (T2) when moving about said fulcrum (204) between an open position and a closed position;
a locking member (200), having a second cam surface (202) configured to move said second end portion (302) from said second radial trajectory (T2) towards said first radial trajectory (T1) during operation, and removably secure said second end portion (302).

2. A clip assembly (100) according to claim 1, wherein said retainer member further comprises an openable resilient clamp member (407) having an outer clamp surface (405) and an inner clamp surface (406).

3. A clip assembly (100) according to claim 2, further comprising a contact member, provided at said inner clamp surface (406) and configured to contactingly engage with the component (500) during use.

4. A clip assembly (100) according to claim 3, wherein said contact member comprises a plurality of circumferentially spaced apart contact elements (401) protruding radially inwards from said inner clamp surface (406).

5. A clip assembly (100) according to any one of claims 3 and 4, wherein said contact member is formed of an elastomeric material.

6. A clip assembly (100) according to any one of claims 3 to 5, wherein said contact member is removably coupled to said clamp member (407).

7. A clip assembly (100) according to any one of the preceding claims, wherein said locking member (200) further comprises a locking recess (201) configured to receive and retain said second end portion (302).

8. A clip assembly (100) according to claim 7, wherein said second end portion (302) comprises a lip portion configured to latchingly engage with said locking recess (201).

9. A clip assembly (100) according to any one of the preceding claims, wherein said resilient closing member (300) further comprises a handle portion (301), configured to manually move said resilient closing member (300) between said closed position and said open position.

10. A clip assembly (100) according to claim 9, wherein said handle portion (301) is further configured to abuttingly engage with said locking member (200) when in said closed position.

11. A clip assembly (100) according to any one of the preceding claims, wherein said first end portion (303) is removably coupled to said fulcrum (204).

12. A clip assembly (100) according to any one of the preceding claims, further comprising a flexible link member (420) coupling said resilient closing member (300) to said retainer member (400).

13. A clip assembly (100) according to any one of the preceding claims, wherein said retainer member (400) further comprises a mount (203) configured to affix said clip assembly (100) to an external structure.

14. A clip assembly (100) according to claim 13, wherein said mount (203) comprises a through-hole for a screw fastener or bolt fastener.

15. A clip assembly (100) according to any one of the preceding claims, wherein said locking member (200) is an integral part of said retainer member (400).

16. A clip assembly (100) according to any one of the preceding claims, wherein said retainer member (400), said resilient closing member (300) and said locking member (200) are made from a polymer.

## Patentansprüche

1. Klammeranordnung (100), aufweisend:
ein Rückhalteelement (400) mit einer ersten Nockenfläche (404), ausgebildet, eine Komponente (500) aufzunehmen und lösbar zurückzuhalten;
ein elastisches Schließelement (300), das einen ersten Endabschnitt (303), der schwenkbar mit einem Drehpunkt (204) des Rückhalteelements (400) gekoppelt ist, und einen zweiten Endabschnitt (302) aufweist, der so angepasst ist, dass er mit der ersten Nockenfläche (404) betriebsfähig in Eingriff tritt, um sich von einer ersten radialen Bahn (T1) zu einer äußeren zweiten radialen Bahn (T2) zu bewegen, wenn er sich um den Drehpunkt (204) zwischen einer geöffneten Position und einer geschlossenen Position bewegt;
ein Verriegelungselement (200) mit einer zweiten Nockenfläche (202), ausgebildet, um während des Betriebs den zweiten Endabschnitt (302) von der zweiten radialen Bahn (T2) zu der ersten radialen Bahn (T1) zu bewegen und den zweiten Endabschnitt (302) lösbar zu befestigen.

2. Klammeranordnung (100) nach Anspruch 1, wobei das Rückhalteelement ferner ein öffenbares elastisches Klemmelement (407) mit einer äußeren Klemmfläche (405) und einer inneren Klemmfläche (406) aufweist.

3. Klammeranordnung (100) nach Anspruch 2, die ferner ein Kontaktelement aufweist, das an der inneren Klemmfläche (406) vorgesehen und so ausgebildet ist, dass es bei Gebrauch mit der Komponente (500) berührungsmäßig in Eingriff tritt.

4. Klammeranordnung (100) nach Anspruch 3, wobei das Kontaktelement eine Vielzahl von in Umfangsrichtung voneinander beabstandeten Kontaktelementen (401) aufweist, die von der inneren Klemmfläche (406) radial nach innen vorstehen.

5. Klammeranordnung (100) nach einem der Ansprüche 3 und 4, wobei das Kontaktelement aus einem elastomeren Material gebildet ist.

6. Klammeranordnung (100) nach einem der Ansprüche 3 bis 5, wobei das Kontaktelement lösbar mit dem Klemmelement (407) gekoppelt ist.

7. Klammeranordnung (100) nach einem der vorhergehenden Ansprüche, wobei das Verriegelungselement (200) ferner eine Verriegelungsausnehmung (201) aufweist, die so ausgebildet ist, dass sie den zweiten Endabschnitt (302) aufnimmt und zurückhält.

8. Klammeranordnung (100) nach Anspruch 7, wobei der zweite Endabschnitt (302) einen Lippenabschnitt aufweist, der so ausgebildet ist, dass er mit der Verriegelungsausnehmung (201) verriegelnd in Eingriff tritt.

9. Klammeranordnung (100) nach einem der vorhergehenden Ansprüche, wobei das elastische Schließelement (300) ferner einen Griffabschnitt (301) aufweist, der so ausgebildet ist, dass er das elastische Schließelement (300) manuell zwischen der geschlossenen Position und der geöffneten Position bewegt.

10. Klammeranordnung (100) nach Anspruch 9, wobei der Griffabschnitt (301) ferner so ausgebildet ist, dass er in der geschlossenen Position mit dem Verriegelungselement (200) aneinandergrenzend in Eingriff tritt.

11. Klammeranordnung (100) nach einem der vorhergehenden Ansprüche, wobei der erste Endabschnitt (303) lösbar mit dem Drehpunkt (204) gekoppelt ist.

12. Klammeranordnung (100) nach einem der vorhergehenden Ansprüche, die ferner ein flexibles Verbindungselement (420) aufweist, welches das elastische Schließelement (300) mit dem Rückhalteelement (400) koppelt.

13. Klammeranordnung (100) nach einem der vorhergehenden Ansprüche, wobei das Rückhalteelement (400) ferner eine Halterung (203) aufweist, die dazu ausgebildet ist, die Klammeranordnung (100) an einer externen Struktur zu befestigen.

14. Klammeranordnung (100) nach Anspruch 13, wobei die Halterung (203) ein Durchgangsloch für ein Schraubbefestigungselement oder ein Bolzenbefestigungselement aufweist.

15. Klammeranordnung (100) nach einem der vorhergehenden Ansprüche, wobei das Verriegelungselement (200) ein integraler Teil des Rückhalteelements (400) ist.

16. Klammeranordnung (100) nach einem der vorhergehenden Ansprüche, wobei das Rückhalteelement (400), das elastische Schließelement (300) und das Verriegelungselement (200) aus einem Polymer hergestellt sind.

## Revendications

1. Ensemble de pince (100), comprenant :
un élément de retenue (400), ayant une première surface de came (404), configuré pour recevoir et retenir de manière amovible un composant (500) ;
un élément de fermeture élastique (300), ayant une première partie d'extrémité (303) couplée de manière pivotante à un point d'appui (204) dudit élément de retenue (400), et une deuxième partie d'extrémité (302) adaptée pour s'engager de manière opérationnelle avec ladite première surface de came (404) de manière à se déplacer d'une première trajectoire radiale (T1) vers une deuxième trajectoire radiale externe (T2) lors du déplacement autour dudit point d'appui (204) entre une position ouverte et une position fermée ;
un élément de verrouillage (200), ayant une deuxième surface de came (202) configuré pour déplacer ladite deuxième partie d'extrémité (302) à partir de ladite deuxième trajectoire radiale (T2) vers ladite première trajectoire radiale (T1) durant le fonctionnement, et fixer de manière amovible ladite deuxième partie d'extrémité (302).

2. Ensemble de pince (100) selon la revendication 1, dans lequel ledit élément de retenue comprend en outre un élément de serrage élastique pouvant être ouvert (407) ayant une surface de serrage extérieure (405) et une surface de serrage intérieure (406).

3. Ensemble de pince (100) selon la revendication 2, comprenant en outre un élément de contact, fourni sur ladite surface de serrage intérieure (406) et configuré pour s'engager en contact avec le composant (500) durant l'utilisation.

4. Ensemble de pince (100) selon la revendication 3, dans lequel ledit élément de contact comprend une pluralité d'éléments de contact (401) espacés circonférentiellement et faisant saillie radialement vers l'intérieur à partir de ladite surface de serrage intérieure (406).

5. Ensemble de pince (100) selon l'une quelconque des revendications 3 et 4, dans lequel ledit élément de contact est formé d'un matériau élastomère.

6. Ensemble de pince (100) selon l'une quelconque des revendications 3 à 5, dans lequel ledit élément de contact est couplé de manière amovible audit élément de serrage (407).

7. Ensemble de pince (100) selon l'une quelconque des revendications précédentes, dans lequel ledit élément de verrouillage (200) comprend en outre un évidement de verrouillage (201) configuré pour recevoir et retenir ladite deuxième partie d'extrémité (302).

8. Ensemble de pince (100) selon la revendication 7, dans lequel ladite deuxième partie d'extrémité (302) comprend une partie de lèvre configurée pour s'engager de manière verrouillable avec ledit évidement de verrouillage (201).

9. Ensemble de pince (100) selon l'une quelconque des revendications précédentes, dans lequel ledit élément de fermeture élastique (300) comprend en outre une partie de poignée (301), configurée pour déplacer manuellement ledit élément de fermeture élastique (300) entre ladite position fermée et ladite position ouverte.

10. Ensemble de pince (100) selon la revendication 9, dans lequel ladite partie de poignée (301) est en outre configurée pour s'engager en butée avec ledit élément de verrouillage (200) lorsqu'elle est dans ladite position fermée.

11. Ensemble de pince (100) selon l'une quelconque des revendications précédentes, dans lequel ladite première partie d'extrémité (303) est couplée de manière amovible audit point d'appui (204).

12. Ensemble de pince (100) selon l'une quelconque des revendications précédentes, comprenant en outre un élément de liaison flexible (420) couplant ledit élément de fermeture élastique (300) audit élément de retenue (400).

13. Ensemble de pince (100) selon l'une quelconque des revendications précédentes, dans lequel ledit élément de retenue (400) comprend en outre une monture (203) configurée pour fixer ledit ensemble de pince (100) à une structure externe.

14. Ensemble de pince (100) selon la revendication 13, dans lequel ladite monture (203) comprend un trou traversant pour une fixation à vis ou une fixation à boulon.

15. Ensemble de pince (100) selon l'une quelconque des revendications précédentes, dans lequel ledit élément de verrouillage (200) fait partie intégrante dudit élément de retenue (400).

16. Ensemble de pince (100) selon l'une quelconque des revendications précédentes, dans lequel ledit élément de retenue (400), ledit élément de fermeture élastique (300) et ledit élément de verrouillage (200) sont fabriqués à partir d'un polymère.
